# EUROPEAN PATENT SPECIFICATION

(11) **EP 2 762 750 B1**
(45) Date of publication and mention of the grant of the patent: **15.11.2017**
(21) Application number: 13153241.8
(22) Date of filing: 30.01.2013
(51) Int. Cl.: F16H 48/08, F16H 48/38

(54) **Improved differential, in particular for ground vehicles**
Verbessertes Differenzial, insbesondere für Bodenfahrzeuge
Différentiel amélioré, en particulier pour des véhicules au sol

(43) Date of publication of application: 06.08.2014
(73) Proprietor: FPT Industrial S.p.A., 10156 Torino (IT)
(72) Inventor: Rossia, Giorgio, 10141 Torino (IT); Fabbricatore, Nicola, 10098 Rivoli (IT); Graziato, Carlo, 10144 Torino (IT)
(74) Representative: Franzolin, Luigi

(56) References cited:
- DE-A1- 4 441 163
- US-A1- 2003 109 350
- US-A1- 2003 144 106

## Description

### Application field of the invention

The present invention refers to the field of the mechanical differentials, similar to those disclosed in DE4441163 (in accordance with the preamble of claim 1) US20030109350 and US2003144106.

### Description of the prior art

Differentials, as well known, carry on the function of distributing the driving torque to the wheels of the same axle.

Such wheels, when driving on a bends, by virtue of the presence of the differential, may rotate with a different speed.

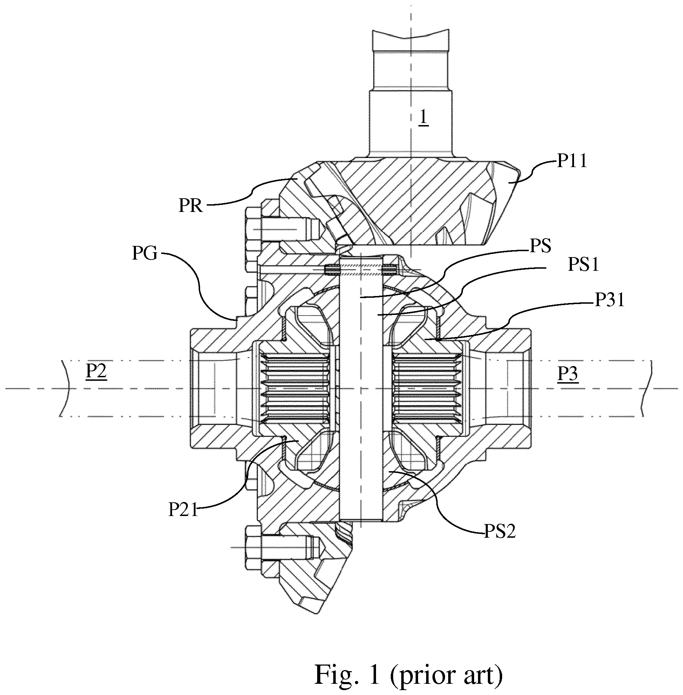

The driving torque is transferred to the differential PD by means of an input shaft P1 and then to the wheels by means of respective output axle shafts P2 and P3. On this regard, it is possible to observe figure 1 according to the prior art.

In particular, the pinion P11, which forms the end of the input shaft P1, meshes with a ring gear PR to which a planet bearing carrier PG is fixed.

A planet gear carrier shaft PS is splined in the planet bearing carrier PG and a pair of planet gears PS1 and PS2 are splined to the planet gear carrier shaft PS, meshing with the sun gears P21 and P31 connected with the ends of the axle shafts P2 and P3.

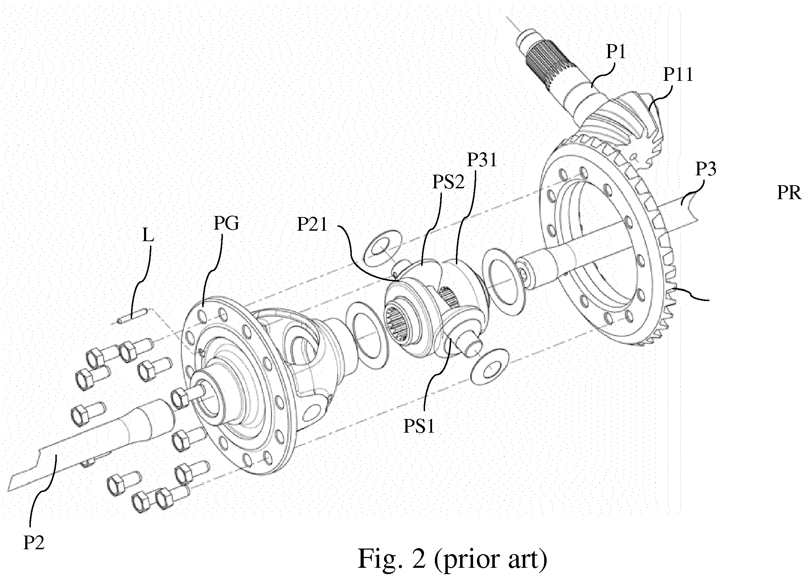

Figure 2 shows an exploded view according to a perspective view of the differential of the prior art shown in figure 1.

Figure 2 clearly shows that the planet bearing carrier PG is not symmetrical with respect to the axis where the axle shafts P2 and P3 lie and that the ring gear PR is assembled to the planet bearing carrier PG by means of a plurality of screws along an annular portion of the planet bearing carrier PG which operatively overlaps to the ring gear PR.

It is worth noting also that the planet gear carrier shaft PS has a completely cylindrical shape, namely its cross section is constant with respect to its development axis.

It is thus necessary to fix the planet gear carrier shaft PS to the planet bearing carrier preventing any degree of freedom with respect to the latter.

To this end, at least a lockpin L is inserted in the planet bearing carrier PG in order to intercept one of the ends of the shaft PS. A further screw is often used to block such lockpin, in order to avoid its disengagement from its seat.

Going back to figure 1, it can be understood that the stresses are transferred from the input shaft P1
- to the ring gear PR,
- to the aforementioned plurality of screws,
- to the planet bearing carrier,
- to the planet gear carrier shaft PS
- etc..

While the ring gear is made of a high-strength material, in order to resist to the friction of the pinion/ring gear coupling, the planet bearing carrier is not made of a special material, since it is not subject to friction.

In order to avoid the planet bearing carrier to be damaged by the friction with the shoulders of the planet gears, P21, P31, the same number of spacers are placed between them and the planet bearing carrier.

Again in figure 1 it is worth noting that the planet bearing carrier is subject to a remarkable twisting moment around the axis in common with the two axle shafts P2 and P3.

Thus, the planet bearing carrier, although it is not made of a special material, has to be able to bear remarkable stresses and thus it has to be sufficiently solid and thus heavy.

### Summary of the invention

Therefore the aim of the present invention is to overcome all the aforementioned drawbacks and to provide an improved differential, in particular for ground vehicles having a reduced weight, but guaranteeing the same or a higher strength and reliability as/than the differentials of the prior art.

The object of the present invention is an improved differential, in particular for ground vehicles, in accordance with claim 1.

Another object of the present invention is a ring gear defining a bevel gear pair of the differential that is object of the present invention.

A further object of the present invention is a vehicle gear box, integrating the aforementioned differential.

Another object of the present invention is a ground vehicle comprising the aforementioned differential.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figures 1 and 2 show section and exploded views of a differential according to the prior art,
figure 3 shows an axial section view according to the axis where the two output axle shafts of the differential lie, of a differential embodiment according to the present invention,

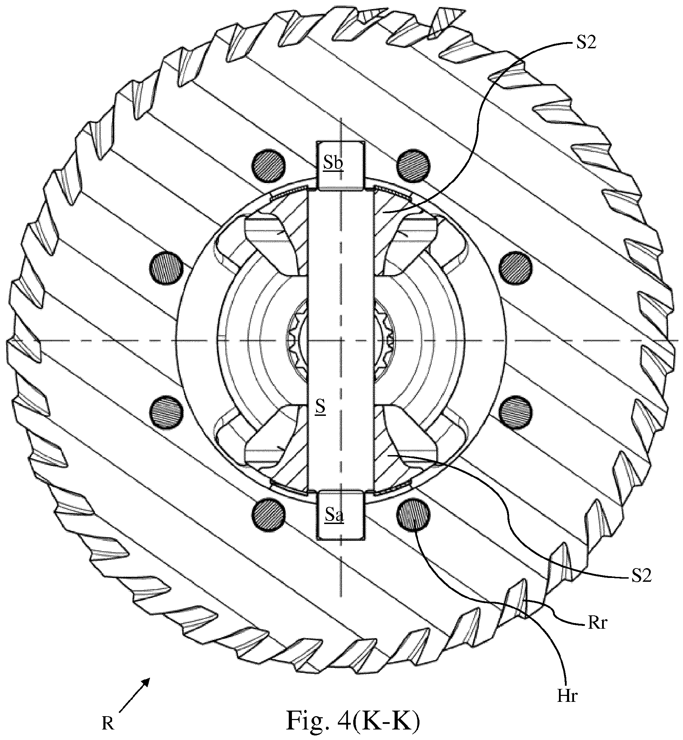

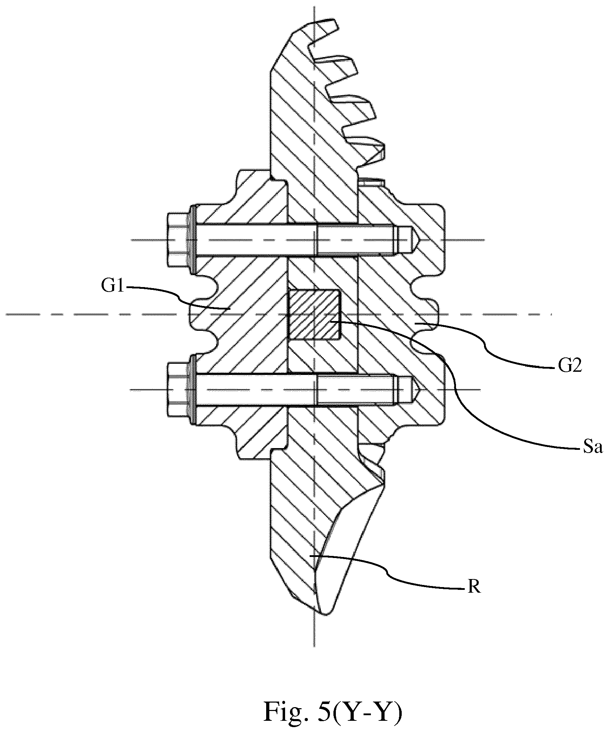

figures 4 and 5 show further section views from the previous figure 3,
figure 6 shows an perspective view of an exploded view of the differential embodiment according to figure 3. In the figures the same reference numbers and letters identify the same elements or components.

### Detailed description of preferred embodiments of the invention

According to the present invention, with reference to the figures from 3 to 6, the planet gear carrier shaft S is splined directly to the ring gear T.

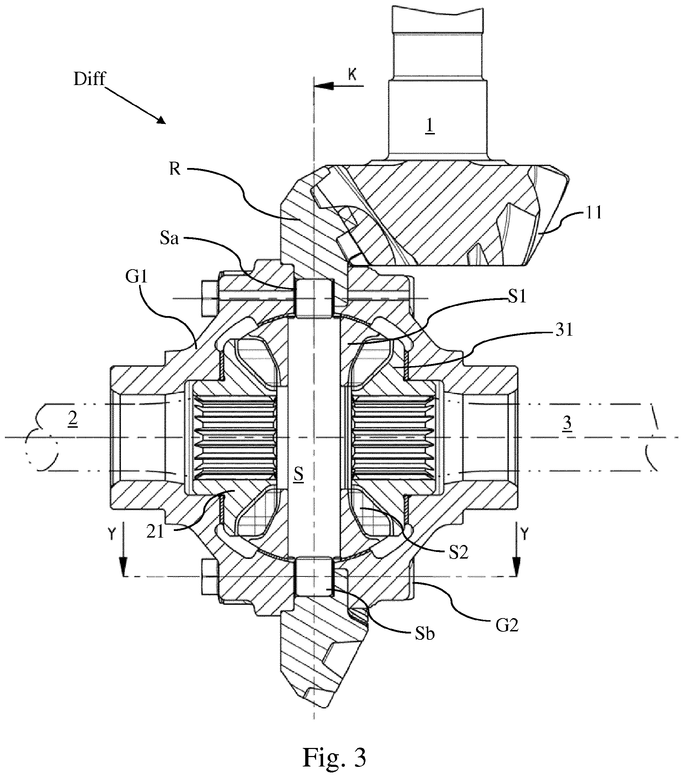

In particular, with particular reference to figure 3, the planet gear carrier shaft S is connected directly with the ring gear defining a diameter of the ring gear itself, in contrast with what is shown in figure 1, wherein the shaft is projecting from the ring wheel, namely outside the profile of the latter.

Thus, according to the present invention, a differential Diff comprises a ring gear R, preferably of the bevel gear type, suitable to be coupled to a pinion 11 operatively connected to an input axle 1, generally connected to an engine.

The ring gear R comprises housing means Ra and Rb arranged within any lateral profile of the gear ring itself in order to house the opposite ends Sa and Sb of the planet gear carrier shaft S. This determines that the planet gear carrier shaft can be directly connected to the ring gear, being a diameter of the ring gear R itself, as described above.

The ring gear R has an annular shape defining a toothed right side Sr, a smooth left side Sl and an internal surface. According to a preferred alternative embodiment of the invention, said housing means Ra and Rb comprise a pair of radial grooves, diametrically opposed to each other, in the internal surface of the annular shape of the ring gear. Such grooves have a shape complementary to the ends Sa and Sb of the shaft S.

Preferably such grooves have a faceted shape, preferably squared, in order to prevent any rotation of the shaft S around its respective longitudinal development axis.

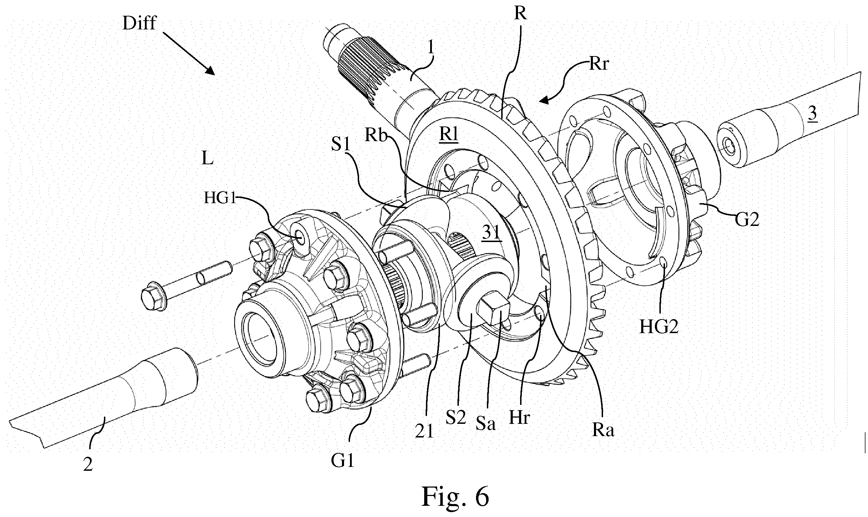

Such grooves may be through or not (namely be blind) according to a direction parallel to the axis X of axial development of the ring gear. This means that the shaft S can be associated to the ring gear by moving it in a direction parallel to itself, both through the right side Rr and through the left side Rl of the ring gear, see figure 6.

A pair of half boxes G1 and G2 are suitable to be associated to the two sides Rr and Rl of the ring gear.

They have substantially the same shape and/or a truncated cone shape or a hemisphere shape. Each top of the half boxes is provided with appropriate openings to allow the passage of the respected axle shafts 2 and 3.

When they are operatively connected to the ring gear, they do not interfere with the teeth of the ring gear.

Once the half boxes are associated to the ring gear, they close the grooves Ra and Rb of the ring gear itself, blocking the shaft S in the ring gear.

The assembly of ring gear and half boxes operatively connected to the ring gear is symmetrical with respect to the axis X where the axle shafts 2 and 3 lie.

When the grooves are not through according to a direction parallel to the axis X, then the shaft can be associated to the ring wheel by means of a single side and a single half box G1 or G2 carries out the aforementioned block function of the shaft S on the ring gear R.

The half boxes may carry out also the function of containing the divergent thrusts on the two axle shafts 2 and 3, keeping the sun gears engaged on the planet gears.

In order to avoid the wear of the half boxes due to the friction with the shoulders of the sun gears 21 and 31, the latter can be equipped with spacers as shown in the prior art.

As regards the planet gears, on the contrary, the spacers may not be present, since they can rub directly and only on the internal surface of the ring gear R, which is made of a strong material.

On this regard, the shoulder of the planet gears, namely the surface opposite to the one provided with teeth, may have a shape complementary to the internal shape of the ring gear.

If, on the contrary, the half boxes define a natural extension of the internal surface of the ring gear, then it is certainly preferable to introduce spacers also for the sun gears.

According to the example shown in the figures, one of the half boxes is provided with through holes Hg 1 and the ring wheel comprises corresponding through holes Hr. The other half box is, on the contrary, equipped with corresponding threaded blind holes Hg2. Thus the screws thread in the blind holes Hg2 passing through the holes Hg1 and Hr, clasping the ring gear R between the half boxes.

In the figures, the ring gear R cooperates in defining a typical bevel gear pair of a differential.

It can also be of the "cylindrical" type to be housed directly in the gearbox of the vehicle.

It will be apparent to the person skilled in the art that other alternative and equivalent embodiments of the invention can be conceived and reduced to practice without departing from the scope of the invention.

Advantageously, the stresses are transmitted from the ring gear directly to the planet gear carrier shaft S, while the box formed by the two half boxes G1 and G2 has the only function to block the planet gear carrier shaft S on the ring gear R. Thus, the half boxes can be of a thin and light material.

Advantageously, since the grooves of the ring gear and the ends of the planet gear carrier shaft have a complementary shape, it is possible to avoid using lockpins and similar components.

From the description set forth above it will be possible for the person skilled in the art to embody the invention with no need of describing further construction details.

The elements and the characteristics described in the different preferred embodiments may be combined without departing from the scope of the present application.

## Claims

1. Improved differential, in particular for ground vehicles, comprising a ring gear (R) receiving its motion from an input shaft (1), a pair of planet gears splined to a planet gear carrier shaft (S) and a pair of sun gears to transfer the motion to respective axle shafts (2 and 3), the sun gears engaging with the planet gears, wherein said planet gear carrier shaft is directly connected to the ring gear (R) defining a diameter of the ring gear (R) itself, wherein said planet gear carrier shaft is completely internal to a lateral profile of the ring gear (R), wherein said ring gear comprises grooves (Ra, Rb) arranged within any lateral profile of the gear ring itself in order to house the opposite ends (Sa, Sb) of the planet gear carrier shaft (S),
comprising a pair of half boxes (G1, G2) suitable to be associated to the two opposite sides (Rr, R1) of the ring gear (R) and
**characterized in that** said half boxes, when associated to the ring gear, are suitable to close the grooves (Ra, Rb) of the ring gear itself, blocking the shaft (S) ends into the ring gear grooves.

2. Differential according to claim 1, wherein said ring gear (R) has an annular shape identifying an internal surface and two opposite sides, of which a right side (Sr) is toothed and a left side (S1) is smooth, and wherein said housing means (Ra, Rb) comprise a pair of radia grooves, diametrically opposed to each other, in the internal surface of the annular shape of the ring gear and having a shape complementary to the ends (Sa, Sb) of the shaft (S).

3. Differential according to claim 2, such grooves have a faceted shape, in order to prevent any rotation of the shaft (S) around its respective longitudinal development axis.

4. Such according to one of the claims 2 or 3, wherein said grooves are through or blind according to a direction parallel to the axis (X) of axial development of the ring gear (R).

5. Differential according to claim 1, wherein said half boxes have substantially the same shape and/or a truncated cone shape or a hemisphere shape.

6. Ground vehicle comprising a differential according to any one of the previous claims.

7. Vehicle gearbox integrating the differential according to any of the claims from 1 to 6.

## Patentansprüche

1. Verbessertes Differential, insbesondere für Bodenfahrzeuge, das ein Hohlrad (R), das seine Bewegung von einer Eingangswelle (1) empfängt, ein Paar Planetenräder, die mit einer Planetenrad-Trägerwelle (S) über eine Keilnutverbindung verbunden sind, und ein Paar Sonnenräder, um die Bewegung an jeweilige Achswellen (2 und 3) zu übertragen, umfasst, wobei die Sonnenräder mit den Planetenrädern in Eingriff sind, wobei die Planetenrad-Trägerwelle mit dem Hohlrad (R) direkt verbunden ist und einen Durchmesser des Hohlrades (R) selbst definiert, wobei sich die Planetenrad-Trägerwelle vollständig in einem seitlichen Profil des Hohlrades (R) befindet, wobei das Hohlrad Rillen (Ra, Rb) aufweist, die in irgendeinem seitlichen Profil des Hohlrades selbst angeordnet sind, um die gegenüberliegenden Enden (Sa, Sb) der Planetenrad-Trägerwelle (S) aufzunehmen, wobei das Differential ein Paar Halbkästen (G1, G2) umfasst, die mit den zwei gegenüberliegenden Enden (Rr, R1) des Hohlrades (R) verbunden werden können, und **dadurch gekennzeichnet, dass** die Halbkästen dann, wenn sie mit dem Hohlrad verbunden sind, die Rillen (Ra, Rb) des Hohlrades selbst verschließen können und die Enden der Welle (S) in den Hohlradrillen blockieren.

2. Differential nach Anspruch 1, wobei das Hohlrad (R) eine Ringform besitzt, die eine innere Oberfläche und zwei gegenüberliegende Seiten definiert, wovon eine rechte Seite (Sr) gezahnt ist und eine linke Seite (S1) glatt ist und wobei die Aufnahmemittel (Ra, Rb) ein Paar radialer Rillen, die einander diametral gegenüberliegen, in der inneren Oberfläche der Ringform des Hohlrades aufweisen und eine Form besitzen, die zu den Enden (Sa, Sb) der Welle (S) komplementär ist.

3. Differential nach Anspruch 2, wobei die Rillen eine Fassettenform haben, um jegliche Drehung der Welle (S) um ihre jeweilige longitudinale Entwicklungsachse zu verhindern.

4. Differential nach einem der Ansprüche 2 oder 3, wobei die Rillen in einer Richtung parallel zu der Achse (X) der axialen Entwicklung des Hohlrades (R) durchgehend oder blind sind.

5. Differential nach Anspruch 1, wobei die Halbkästen im Wesentlichen die gleiche Form und/oder eine Kegelstumpfform oder eine Halbkugelform haben.

6. Bodenfahrzeug, das ein Differential nach einem der vorhergehenden Ansprüche umfasst.

7. Fahrzeuggetriebe, das das Differential nach einem der Ansprüche 1 bis 6 umfasst.

## Revendications

1. Différentiel perfectionné, en particulier pour véhicules terrestres, comprenant une couronne dentée (R) recevant son mouvement depuis un arbre d'entrée (1), une paire de satellites clavetés sur un arbre de support (S) de satellite et une paire de planétaires pour transférer le mouvement à des arbres d'essieu respectifs (2 et 3), les planétaires entrant en prise avec les satellites, dans lequel ledit arbre de support de satellite est directement relié à la couronne dentée (R) définissant un diamètre de la couronne dentée (R) elle-même, dans lequel ledit arbre de support de satellite est complètement interne à un profilé latéral de la couronne dentée (R), dans lequel ladite couronne dentée comprend des rainures (Ra, Rb) agencées dans tout profilé latéral de la couronne dentée elle-même afin de loger les extrémités opposées (Sa, Sb) de l'arbre de support (S) de satellite,
comprenant une paire de demi-boîtes (G1, G2) appropriées pour être associées aux deux côtés opposés (Rr, R1) de la couronne dentée (R) et **caractérisé en ce que** lesdites demi-boîtes, quand elles sont associées à la couronne dentée, sont appropriées pour fermer les rainures (Ra, Rb) de la couronne dentée elle-même, bloquant les extrémités d'arbre (S) dans les rainures de couronne dentée.

2. Différentiel selon la revendication 1, dans lequel ladite couronne dentée (R) a une forme annulaire identifiant une surface interne et deux côtés opposés, dont un côté droit (Sr) est denté et un côté gauche (S1) est lisse, et dans lequel le moyen formant logement (Ra, Rb) comprend une paire de rainures radiales, diamétralement opposées l'une à l'autre, dans la surface interne de la forme annulaire de la couronne dentée et ayant une forme complémentaire des extrémités (Sa, Sb) de l'arbre (S).

3. Différentiel selon la revendication 2, de telles rainures ayant une forme à facettes, afin d'empêcher toute rotation de l'arbre (S) autour de son axe de développement longitudinal respectif.

4. Différentiel selon l'une des revendications 2 ou 3, dans lequel lesdites rainures sont traversantes ou pleines selon une direction parallèle à l'axe (X) de développement axial de la couronne dentée (R).

5. Différentiel selon la revendication 1, dans lequel lesdites demi-boîtes ont sensiblement la même forme et/ou une forme tronconique ou une forme hémisphérique.

6. Véhicule terrestre comprenant un différentiel selon l'une quelconque des revendications précédentes.

7. Boîte de vitesses de véhicule intégrant le différentiel selon l'une quelconque des revendications 1 à 6.
